# EUROPEAN PATENT SPECIFICATION

(11) **EP 3 531 095 B1**
(45) Date of publication and mention of the grant of the patent: **28.10.2020**
(21) Application number: 19159789.7
(22) Date of filing: 27.02.2019
(51) Int. Cl.: G01K 17/06, H04Q 9/00, F24D 19/10

(54) **HEAT COST ALLOCATOR DEVICE**
HEIZKOSTENVERTEILER
RÉPARTITEURS DES FRAIS DE CHAUFFAGE

(30) Priority: 27.02.2018 IT 201800003089
(43) Date of publication of application: 28.08.2019
(73) Proprietor: IoTT IPR-18 S.r.l., 35124 Padova (IT)
(72) Inventor: Cantagallo, Antonio, 35124 Padova (IT); Natale, Carlo, 35124 Padova (IT); Vesentini, Lorenzo, 35124 Padova (IT); Oliosi, Patrizio, 35124 Padova (IT); Zaccarini, Francesco, 35124 Padova (IT)
(74) Representative: Fisauli, Beatrice A. M.

(56) References cited:
- EP-A2- 1 765 027
- CN-A- 107 063 379
- CN-U- 206 789 036
- DE-A1- 19 821 536
- DE-A1-102008 061 087
- DE-C1- 19 954 579
- DE-U1-202015 005 283

## Description

The present invention concerns a heat cost allocator device for application to a radiator of a heating system.

Heat cost allocators (HCA) are devices used in apartment blocks or in buildings equipped with centralized heating systems which measure the thermal energy emitted by each individual heating element (typically a radiator) and, therefore, allocate the heating costs among the various users (heat metering).

The known heat cost allocators are generally provided with one or two temperature sensors.

In the first case, the sole sensor is located in the rear part of the device, which is applied and fixed in contact with the surface of the radiator, to detect the mean temperature of the latter. The energy consumption is calculated by comparing the temperature value detected with a predefined ambient temperature considered constant (generally approximately 20°C).

In the second case, the device also comprises a further temperature sensor to detect the ambient temperature, with calculation of the difference between the latter and the radiator temperature detected.

In both cases, the temperature values are entered in specific algorithms from which adimensional parameters are obtained which, in turn, allow for allocation of the heating costs to the various users.

The data generated by each individual heat cost allocator are stored in the device itself and transferred at varying time intervals, generally a few days, to a local data collection system provided in the building.

For this purpose, in general, the heat cost allocator devices are equipped with a radio device that allows transfer of the data stored to said local system without requiring a direct reading on each individual heat cost allocator device. The radio systems used in the known heat cost allocator devices transmit mainly on frequencies of 868 MHz or 486 MHz.

According to the known art, the local collection system that receives the data from the various heat cost allocator devices comprises intermediate control units, generally located on each floor of the building, adapted to receive the data from the nearest heat cost allocator devices, typically the one on the corresponding floor. The local collection system further comprises a centralizing device, connected to the various control units, to which all the data taken from all the heat cost allocator devices in the building, or in any case served by that local collection system, are conveyed.

The centralizing device allows the connection of external devices for reading the data collected; alternatively, the centralization device is provided by a wireless connection of GSM type or similar by means of which it can communicate with one or more servers.

An example of said known apparatus is described in EP 1765027 A2. A heat cost allocator device according to the preamble of claim 1 is known from patent DE19954579C1.

The system described has some drawbacks and limitations. Firstly, the arrangement of the components of the local collection system (installation of control units, wiring, etc.) entails a substantial cost, especially in large buildings. Said system also requires constant control and periodic maintenance to avoid transfer errors in the readings of the devices.

Furthermore, in some buildings, due to structural limitations or limitations of other types, it is not possible to install the above-mentioned components of the local collection system. These cases require direct reading of the values recorded on the display of the various heat cost allocator devices in the building with a considerable expenditure of time and resources.

In this context the object of the present invention is to propose a heat cost allocator device that overcomes the limits of the devices in the known art.

Therefore, the object of the present invention is to make available a heat cost allocator device that allows collection of the energy consumption data in a building in a less complex and costly manner than in the known art.

In particular, the object of the present invention is to provide a heat cost allocator that allows collection of the energy consumption data in a building without the use of equipment in the shared areas, such as, for example, centralization devices or equivalent devices, and which can therefore be used in any building without limitations.

The object of the present invention is also to provide a heat cost allocator device that allows transfer of the data processed and stored directly to a remote collection system, physically detached and generally far from the building, in a more efficient manner than the known systems.

A further object of the present invention is to provide a heat cost allocator device that guarantees greater autonomy than the known devices.

A further object of the present invention is to provide a compact heat cost allocator device with reduced dimensions.

These and further objects are achieved by a heat cost allocator device according to the invention which is able to connect directly to the wide area network (internet) to communicate with a remote data collection system, for example a web platform or a server, for example of cloud type.

In greater detail, said device is provided with an integrated radio communication system configured to communicate directly with wide area network base radio stations and in particular with Telco operator Base Stations.

Therefore, according to the invention, each heat cost allocator device of a building can connect directly and independently to the wide area network (internet) to communicate with the remote collection system.

In particular, each heat cost allocator device can send to the above-mentioned remote collection system, via the wide area network (internet), the information already processed and stored within it relative to the energy consumption.

The heat cost allocator device thus configured therefore provides a system for management and allocation of the energy costs of a building which, in addition to the heat cost allocators on the various heating elements, does not require the installation of any further equipment, and therefore does not require any interventions or modifications of the shared parts of the building.

The present invention therefore concerns a heat cost allocator device, for application to a heating element of a room, comprising a body configured to be fixed in contact with said heating element, said body containing at least one logic unit, at least one temperature sensor, at least one electric charge accumulator and an integrated radio communication system as described above.

The radio communication system preferably comprises a communication module, for example GSM, controlled by the logic unit.

Preferably, the communication system is configured to communicate with Telco operator Base Stations which support telecommunications in compliance with the 3GPP standard.

According to a preferred aspect of the invention, the communication between the Telco operator Base Station and the heat cost allocator device is by means of the NB-IoT or LTE Cat M1 protocols.

The use of said protocols, together with the adoption of an integrated antenna described in further detail below, helps to significantly reduce the energy consumption of the device, guaranteeing a duration of the integrated charge accumulator even longer than ten years (the mean duration of the batteries of the known devices), the latter having reduced dimensions that provide a very compact device.

This is important since said devices are often located in visible points and, therefore, the smaller the external dimensions, the lower the aesthetic impact on the environment where they are installed.

Furthermore, said solution further makes it possible to do without further units or additional external components for communication with the wide area network.

The communication between the Telco operator Base Station and the heat cost allocator device, however, can also be through subsequent evolutions of the aforementioned protocols or, in any case, through new protocols or standards that may be developed subsequently.

According to a preferred aspect of the invention, the communication on wide area network and the exchange of information between the heat cost allocator device and remote collection system is bidirectional. In this way it is possible to remote-control the heat cost allocator devices, for example to configure operating parameters, to update the firmware etc. Said remote control, for example, can be actuated by means of the web platform which acts as a remote data collection system.

According to one aspect of the invention, the integrated communication system can comprise a SIM. Said SIM can be of standard type or, preferably, of "SIM on chip" or "Embedded SIM" type.

According to another aspect of the invention, the device is provided with an integrated antenna.

According to a possible embodiment, the antenna has at least one radiating element, preferably of unbalanced type.

According to some preferred embodiments, the radiating element can be chosen from the following types:
- Semiloop;
- IFA (Inverted F Antenna);
- ILA (Inverted L Antenna);
- Top loaded or meander monopole.

The antenna can also have several radiating elements, for example according to an antenna array configuration or with MIMO (Multiple Input Multiple Output) architecture.

According to one aspect of the invention, the radiating element is preferably configured to operate in synergy with the metal structure of the heating element (radiator) on which the heat cost allocator device is applied.

In particular, said unbalanced radiating element exploits the principle of the image plane according to which a perfect electric conductor (P.E.C.) located near the radiating element with a given length L is equivalent to a further radiating element of equal length.

In the device of the present invention, it is therefore possible to adopt a radiating element with given length L and obtain performance equivalent to the performance that would be obtained with a radiating element of double the length.

According to one embodiment of the invention, the metal structure of the heating element is connected to the ground plane of the heat cost allocator device so as to exploit said metal structure as the image plane.

The radiating element preferably has a dimension (length) of approximately λ/4, where λ is the inverse of the communication frequency.

As explained above, instead of equipping the device with a symmetrical type radiating element, consisting of two extensions having a total length of approximately λ/2, a radiating element of approximately half the length is used, where the functionality of the missing part is obtained by equivalent currents induced on the metal surface of the heating element on which the heat cost allocator device is mounted.

Said configuration increases the gain of the antenna, optimizing the performance and reducing energy consumption. In this way the heat cost allocator can communicate with Telco operator Base Stations even when the latter are distant or, in any case, when the signal coverage is weak.

Furthermore, the reduced dimension of the integrated radiating element means that the dimensions of the body of the device can be limited while guaranteeing low energy consumption. This allows all the heat cost allocator devices installed in an environment to be equipped with the communication system according to the invention.

According to one embodiment, the metal structure of the heating element is placed in electric contact with the ground plane of the heat cost allocator device.

Said connection can be made, for example, by means of an at least partly metallic fastening plate, positioned on the rear side of the body of the device, which is placed in direct contact with the metal structure of the heating element and is electrically connected to the ground plane.

According to another aspect of the invention, the heat cost allocator device can be equipped with an integrated electric current generator, which can act as a recharging device for the charge accumulator.

According to one possible embodiment, said electric current generator is preferably configured to generate electrical energy by exploiting the hot surface of the heating element.

For example, the generator can comprise thermocouples or Peltier cells used as current generators, or other equivalent devices which exploit the same physical principles.

In this way, since the charge accumulator can be at least partly recharged, it is possible to increase the autonomy of the heat cost allocator or, if necessary, adopt a charge accumulator with lower capacity to further reduce the dimensions of the device.

The heat cost allocator device of the invention is therefore equipped with an autonomous and self-sufficient power supply system, which can be completely integrated in the body of the device, in accordance with the duration and dimension limits imposed by the market.

From tests carried out by the applicant, in fact, even when the device is not equipped with current generator, it is possible to adopt an accumulator with capacity ranging from 500 mAh to 600 mAh, guaranteeing in any case operation of the device for over ten years.

Further characteristics and details of the invention can be better understood from the following description, provided by way of non-limiting example, and from the attached drawings in which:

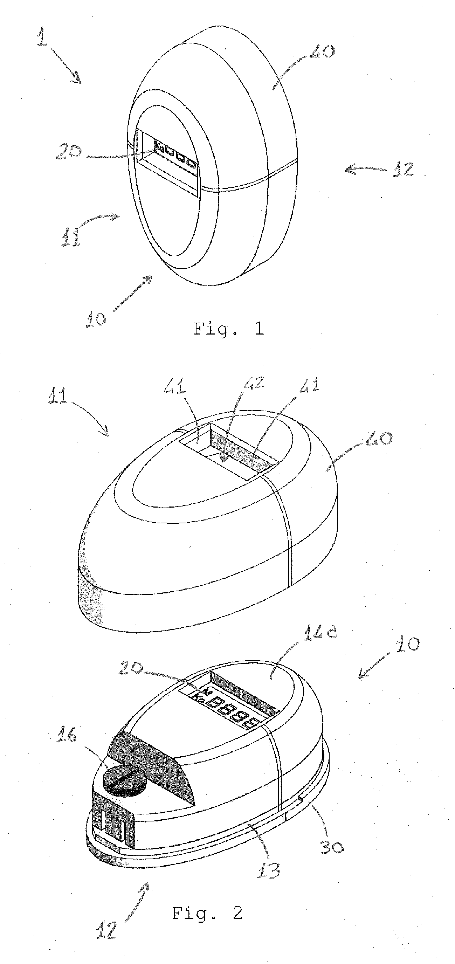

- figure 1 is a perspective view of the heat cost allocator device, according to the invention;

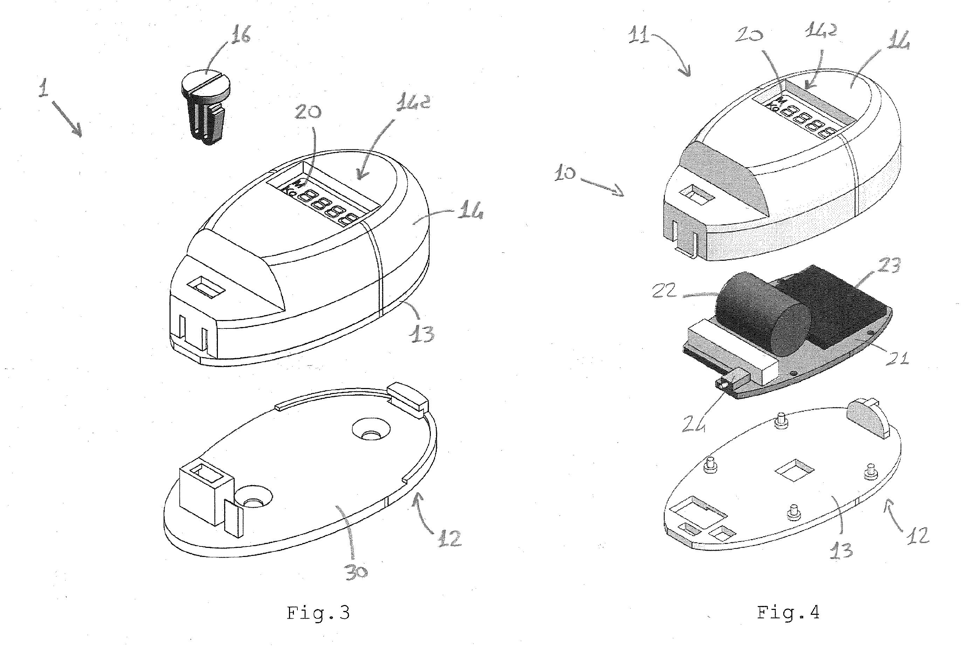

- figures 2 and 3 are two perspective views of the heat cost allocator device of figure 1 partially disassembled;
- figure 4 is an exploded perspective view of the body of the heat cost allocator device of figure 1;
- figure 5 is a section view of the heat cost allocator device applied to a radiator.

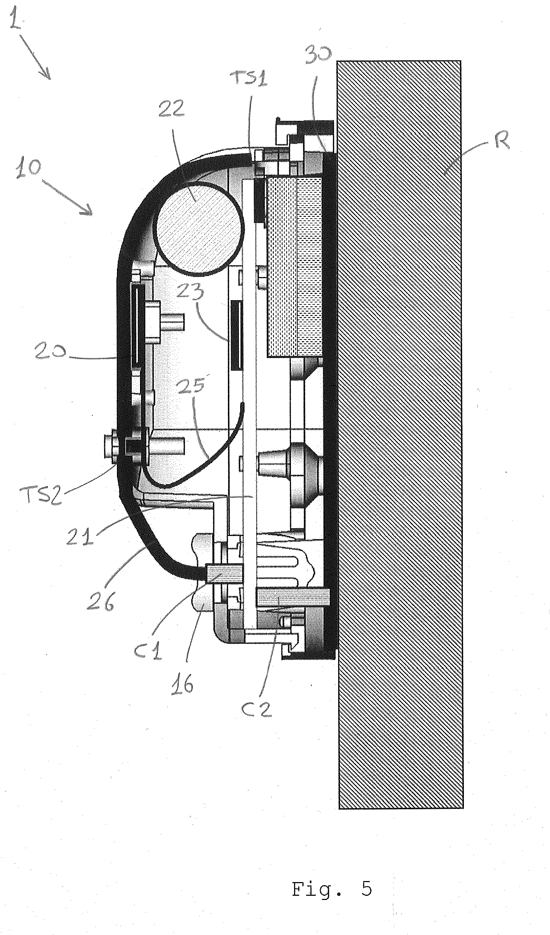

With reference to the attached figures, the heat cost allocator device, indicated overall by 1, comprises a body 10 with a front side 11 and a rear side 12. In general, the device 1 is applied to a radiator R of a heating system (fig. 5) with the rear side 12 directly in contact with said radiator.

According to a preferred embodiment example, the body 10 comprises a base 13, in the area of the rear side 12, and a cover 14, in the area of the front side 11, which can be reciprocally coupled to define an internal housing 15.

The cover 14 is provided with a window 14a which can house a display 20 on which the information processed by the device is shown, typically numbers or adimensional values.

Preferably, the device 1 comprises a fastening plate 30 positioned on the rear side 12. When the device is applied to the radiator R, said fastening plate 30 is preferably in direct contact with at least a metallic part of the radiator R.

The plate 30 is fastened on the radiator by means of known type such as, for example, bolts, tie rods or similar, not illustrated in the figures.

The fastening plate 30 is coupled to the base 13 of the body 10 by interlocking or pressure means, screws or similar. Preferably the fastening plate 30 is at least partly, or entirely, made of metal and more preferably of aluminium or other materials having equivalent heat conduction capacity.

The functional components of the device are arranged in the housing 15. In the example represented, said components are a PCB 21 (printed circuit board), a charge accumulator 22, preferably a battery, a logic unit 23, which preferably includes a memory, a first temperature sensor on the radiator side TS1, a second temperature sensor on the ambient side TS2 and an integrated antenna 26.

Preferably, the antenna 26 is connected to the PCB by means of a connector C1.

The logic unit 23 preferably comprises a microcontroller.

The device further comprises a GSM communication module, not illustrated in the figure, controlled by said logic unit 23, which can be separate or integrated in the logic unit 23.

According to the invention, the fastening plate 30, or rather the metallic part thereof, is electrically connected to the PCB by means of a connector C2. As explained above, this configuration allows the communication system to exploit the metal structure of the radiator R as an image plane which is part of the integrated antenna system.

Said configuration therefore provides an antenna system with a high gain and a limited energy absorption.

The antenna preferably comprises an ILA (Inverted L Antenna) unbalanced radiating element.

According to the invention, the device further comprises a SIM on chip, not illustrated, preferably connected to the PCB 21. Alternatively, the device can comprise a SIM card housed in a specific compartment provided with connection contacts connected to the PCB.

The above-mentioned SIM allows the device to communicate with Telco operator Base Stations via the NB-IoT or LTE Cat M1 protocols or subsequent evolutions.

The display 20 is preferably connected to the PCB 21 by means of a flexible strip cable 25.

Preferably, the first temperature sensor TS1 is physically in contact or, in any case, in thermal connection with the fastening plate 30 so as to detect a temperature closest to that of the radiator R.

The second temperature sensor TS2, on the other hand, is preferably located in the internal compartment 15, as near as possible to the frontal area 11, to detect the ambient temperature. According to a preferred embodiment, the second temperature sensor is mounted on the strip connection cable 25 of the display 20. The cable 25 therefore acts as a support to sustain and keep said sensor in position in the compartment 15. This configuration allows both for positioning of the second sensor as far as possible from the radiator R, i.e. just below the cover 14, and for elimination of any heat conduction effects from the PCB 21.

In this variation, the strip cable 25 comprises the connection wires dedicated to operation of the temperature sensor.

According to a variation of the invention, the device also comprises an electric current generator 28 connected to the charge accumulator 22 and if necessary driven by the logic unit 23.

Said electric current generator preferably comprises a thermocouple or a Peltier cell. In this way it is possible to exploit the temperature difference between the surface of the heating element, when operating, and the external environment to generate electric current through the above-mentioned devices.

Said current can be supplied to the charge accumulator 22 to recharge it at least partially.

Preferably the heat cost allocator is further equipped with an anti-tampering system adapted to detect, and if necessary signal, when the body 10 of the device is open or removed or moved away from the radiator.

According to one embodiment, said anti-tampering system comprises a switch or microswitch 24 mounted on the PCB and connected to the logic unit 23 of the device. The body 10 is provided with a key 16 adapted to secure the base 13 and the cover 14 to the fastening plate 30.

To separate the cover 14 from the base 13 or the body 10 from the fastening plate 30, said mechanical key 16 must necessarily be removed.

Said key 16 is typically in the form of a pin, tongue or equivalent. The key 16 is generally inserted in appropriate seats in the body 10 and in the fastening plate 30.

The key 16 cooperates with a movable part of the switch 24. When the key 16 is removed from the body 10, the switch 24 changes its state which is detected by the logic unit 23, which generates a tampering signal.

In the example of the figures, the device is equipped with a covering element 40 which can be releasably coupled to the body 10. Said covering element 40 is not operatively connected to other parts of the device and can therefore be removed and replaced without triggering tampering alarms. Typically the function of the covering element is purely aesthetic or in any case not connected with operation of the heat cost allocator device. In further detail, this particular configuration allows the user to apply covering elements 40 customized with different colours and/or shapes to the heat cost allocator devices mounted on the radiators in his/her home, office, etc.

In the example of the figures, fastening of the covering element 40 on the body 10 is obtained by means of tabs or tongues 41 which engage the edges of the window 14a of the cover 14, in the area of the display 20. Said covering element 40 preferably also comprises a window 42 which in the coupling position is aligned with the window 14a of the cover 14 to show the display 20. Clearly, the covering element 40 can be coupled to the body 10 in any other manner compatible with said function, for example by interlocking, pressure or magnetic means, or similar.

The invention has been described for illustrative non-limiting purposes, according to some preferred embodiments. A person skilled in the art will be able to find numerous other embodiments and variations, all falling within the protective scope of the following claims.

## Claims

1. A heat cost allocator device (1), for application to a heating element (R) in a room of a building, comprising a body (10) configured to be fixed in contact with said heating element, said body enclosing at least:
- a logic unit (23);
- a first temperature sensor (TS1);
- an electric charge accumulator (22);
- an integrated radio communication system;
**characterized in that** said radio communication system comprises a communication module controlled by the logic unit configured to communicate directly with Telco operator base stations to connect to the wide area network (internet) and, through said wide area network, to communicates with a remote data collection system for sending to it information already processed and stored in the cost allocator device relative to the energy consumption.

2. The device according to claim 1, in which the radio communication system is configured to communicates through the NB-IoT or LTE Cat M1 protocols.

3. The device according to any one of the preceding claims, in which the radio communication system comprises a SIM on chip or embedded SIM or a standard SIM card.

4. The device according to any one of the preceding claims, in which the radio communication system comprises an integrated antenna (26) with at least one radiating element.

5. The device according to claim 4, in which said radiating element is chosen from the following types:
- Semiloop;
- IFA (Inverted F Antenna);
- ILA (Inverted L Antenna);
- Top loaded or meander monopole.

6. The device according to claim 4 or 5, in which the antenna has several radiating elements according to an antenna array configuration or a configuration with MIMO architecture.

7. The device according to one of the claims from 4 to 6, in which said radiating element is of the unbalanced type.

8. The device according to any one of the preceding claims, comprising a fastening plate (30) made at least partly of metal, positioned on a rear side (12) of the body (10) and intended to be placed in direct contact with the heating element (R), said fastening plate (30) being electrically connected to the ground plane of the heat cost allocator device.

9. The device according to any one of the preceding claims, comprising an integrated electric current generator (28), which can act as a recharging device for the charge accumulator (22), said current generator (28) comprising thermocouples or Peltier cells used as current generators.

10. The device according to any one of the preceding claims, comprising a display (20), positioned on the front side (11) of the body (10) and powered by a flexible strip cable (25), the device further comprising a second temperature sensor (TS2) mounted on said flexible strip cable (25).

11. An apparatus for collecting and processing the energy consumption data in a building comprising one or more heat cost allocators (1) according to any one of the preceding claims and at least one remote data collection system, in which each heat cost allocator (1) is configured to connect to Telco operator Base Stations at least to transmit data processed and stored in the heat cost allocator to said remote collection system, through the wide area network (internet).

## Patentansprüche

1. Eine Heizkostenverteilervorrichtung (1) zur Anwendung an einem Heizelement (R) in einem Raum eines Gebäudes, umfassend einen Körper (10), der so konfiguriert ist, dass er in Kontakt mit dem besagten Heizelement befestigt werden kann, wobei der besagte Körper mindestens Folgendes einschließt:
- eine logische Einheit (23);
- einen ersten Temperatursensor (TS1);
- einen Akkumulator für elektrische Ladung (22);
- ein integriertes Funkkommunikationssystem;
**dadurch gekennzeichnet, dass** das besagte Funkkommunikationssystem ein Kommunikationsmodul umfasst, das von der logischen Einheit gesteuert wird und so konfiguriert ist, dass es direkt mit Telco-Betreiber-Basisstationen kommuniziert, um eine Verbindung mit dem Wide Area Network (Internet) herzustellen, und über das besagte Wide Area Network mit einem entfernten Datensammelsystem kommuniziert, um an dieses Informationen zu senden, die bereits verarbeitet und in der Kostenverteilungsvorrichtung in Bezug auf den Energieverbrauch gespeichert sind.

2. Die Vorrichtung gemäß Anspruch 1, in der das Funkkommunikationssystem so konfiguriert ist, dass es über die Protokolle NB-IoT oder LTE Cat M1 kommuniziert.

3. Die Vorrichtung gemäß einem jeglichen der vorhergehenden Ansprüche, bei dem das Funkkommunikationssystem eine SIM on Chip oder eingebettete SIM oder eine Standard-SIM-Karte umfasst.

4. Die Vorrichtung gemäß einem jeglichen der vorhergehenden Ansprüche, bei der das Funkkommunikationssystem eine integrierte Antenne (26) mit mindestens einem Strahlerelement umfasst.

5. Die Vorrichtung gemäß Anspruch 4, bei der das besagte Strahlerelement aus den folgenden Typen ausgewählt wird:
- Halbschleife;
- IFA (Inverted F Antenna);
- ILA (Inverted L Antenna);
- T oder Mäander-Monopol.

6. Die Vorrichtung gemäß Anspruch 4 oder 5, bei der die Antenne mehrere Strahlerelemente gemäß einer Antennengruppenkonfiguration oder einer Konfiguration mit MIMO-Architektur aufweist.

7. Die Vorrichtung gemäß einem der Ansprüche von 4 bis 6, bei der das besagte Strahlerelement von unsymmetrischem Typ ist.

8. Die Vorrichtung gemäß einem jeglichen der vorhergehenden Ansprüche, umfassend eine Befestigungsplatte (30), die zumindest teilweise aus Metall besteht, auf einer Rückseite (12) des Körpers (10) angeordnet und dazu bestimmt, in direkten Kontakt mit dem Heizelement (R) gebracht zu werden, wobei die besagte Befestigungsplatte (30) elektrisch mit der Massefläche der Heizkostenverteilungsvorrichtung verbunden ist.

9. Die Vorrichtung gemäß einem jeglichen der vorhergehenden Ansprüche, die einen integrierten elektrischen Stromgenerator (28) umfasst, der als Ladegerät für den Ladungsakkumulator (22) dienen kann, wobei der besagte Stromgenerator (28) Thermoelemente oder Peltier-Zellen umfasst, die als Stromgeneratoren verwendet werden.

10. Die Vorrichtung gemäß einem jeglichen der vorhergehenden Ansprüche, umfassend eine Anzeige (20), die auf der Vorderseite (11) des Körpers (10) angeordnet ist und durch ein flexibles Bandkabel (25) gespeist wird, wobei die Vorrichtung ferner einen zweiten Temperatursensor (TS2) umfasst, der auf dem besagten flexiblen Bandkabel (25) angebracht ist.

11. Ein Gerät zum Sammeln und Verarbeiten der Energieverbrauchsdaten in einem Gebäude, umfassend einen oder mehrere Heizkostenverteiler (1) gemäß einem jeglichen der vorhergehenden Ansprüche und mindestens ein entferntes Datenerfassungssystem, wobei jeder Heizkostenverteiler (1) so konfiguriert ist, dass er mit Telco-Betreiber-Basisstationen verbunden ist, um mindestens die im Heizkostenverteiler verarbeiteten und gespeicherten Daten über das Wide Area Network (Internet) an das besagte entfernte Datenerfassungssystem zu übertragen.

## Revendications

1. Répartiteur des frais de chauffage (1), destiné à être appliqué à un élément de chauffage (R) dans une pièce d'un bâtiment, comprenant un corps (10) configuré pour être fixé en contact avec ledit élément de chauffage, ledit corps renfermant au moins :
- une unité logique (23) ;
- un premier capteur de température (TS 1) ;
- un accumulateur de charge électrique (22) ;
- un système de communication radio intégré ;
**caractérisé par le fait que** ledit un système de communication radio comprend un module de communication commandé par l'unité logique configuré pour communiquer directement avec les stations de base de l'opérateur de télécommunications afin de se connecter au réseau étendu (Internet) et, par l'intermédiaire dudit réseau étendu, pour communiquer avec un système de collecte de données à distance afin de lui envoyer des informations déjà traitées et stockées dans le répartiteur des frais relatives à la consommation d'énergie.

2. Dispositif selon la revendication 1, dans lequel le système de communication radio est configuré pour communiquer via les protocoles NB-IoT ou LTE Cat M1.

3. Dispositif selon l'une des revendications précédentes, dans lequel le système de communication radio comprend une carte SIM sur puce ou une carte SIM intégrée ou une carte SIM standard.

4. Dispositif selon l'une des revendications précédentes, dans lequel le système de communication radio comprend une antenne intégrée (26) avec au moins un élément rayonnant.

5. Dispositif selon la revendication 4, dans lequel ledit élément rayonnant est choisi parmi les types suivants :
- Semi-boucle ;
- IFA (antenne F inversée) ;
- ILA (antenne L inversée) ;
- En T ou unipolaire à méandres.

6. Dispositif selon la revendication 4 ou 5, dans lequel l'antenne a plusieurs éléments rayonnants selon une configuration de réseau d'antennes ou une configuration avec architecture MIMO.

7. Dispositif selon l'une des revendications de 4 à 6, dans lequel ledit élément rayonnant est de type asymétrique.

8. Dispositif selon l'une des revendications précédentes, comprenant une plaque de fixation (30) réalisée au moins partiellement en métal, positionnée sur une face arrière (12) du corps (10) et destinée à être placée en contact direct avec l'élément chauffant (R), ladite plaque de fixation (30) étant reliée électriquement au plan de masse du répartiteur des frais de chauffage.

9. Dispositif selon l'une des revendications précédentes, comprenant un générateur de courant électrique intégré (28), qui peut servir de dispositif de recharge pour l'accumulateur de charge (22), ledit générateur de courant (28) comprenant des thermocouples ou des cellules Peltier utilisés comme générateurs de courant.

10. Dispositif selon l'une des revendications précédentes, comprenant un écran (20), positionné sur la face avant (11) du corps (10) et alimenté par un câble à bande flexible (25), le dispositif comprenant en outre un second capteur de température (TS2) monté sur ledit câble à bande flexible (25).

11. Appareil pour collecter et traiter les données de consommation d'énergie dans un bâtiment comprenant un ou plusieurs répartiteurs des frais de chauffage (1) selon l'une des revendications précédentes et au moins un système de collecte de données à distance, dans lequel chaque répartiteur des frais de chauffage (1) est configuré pour se connecter aux stations de base de l'opérateur de télécommunications au moins pour transmettre les données traitées et stockées dans le répartiteur des frais de chauffage audit système de collecte à distance, par le biais du réseau étendu (Internet).
